Europäisches Patentamt

European Patent Office

Office européen des brevets

(11) Publication number: **0 152 209**
**A2**

(12) **EUROPEAN PATENT APPLICATION**

(21) Application number: 85300509.8

(22) Date of filing: 25.01.85

(51) Int. Cl.⁴: **C 08 K 9/10**
C 09 J 3/00, C 08 G 59/18
C 08 G 18/16, C 08 L 83/04

(30) Priority: 27.01.84 US 574501

(43) Date of publication of application:
21.08.85 Bulletin 85/34

(84) Designated Contracting States:
CH DE FR GB IT LI SE

(71) Applicant: LOCTITE (IRELAND) Ltd.
Whitestown Industrial Estate
Tallaght, Co. Dublin(IE)

(72) Inventor: Martin, Francis R.
69 Templeogue Wood
Templeogue Dublin 2(IE)

(72) Inventor: Grant, Seamus M.
38 The Heights Woodpark
Ballinteer Dublin 16(IE)

(72) Inventor: Sheenan, John
100 Moyville
Rathfarnham, Dublin 16(IE)

(74) Representative: Marchant, James Ian et al,
Elkington and Fife High Holborn House 52/54 High
Holborn
London WC1V 6SH(GB)

(54) Storage stable one-pack compositions.

(57) One-pack curable compositions having extended shelf
or pot-life are obtained by dissolving or dispersing at least
one component of the cure initiation system in finely divided
meltable resin particles which are then included in the
composition as a slurry of undissolved particles. The component isolated within the resin particles may be released, so as
to induce rapid curing, by heating the composition to the
melting point of the particles.

Insoluble meltable resin particles may be used as a
matrix for isolating other noninitiator components of curable
compositions such as additives which have destabilizing
effects, dyes or pigments, and stabilizers.

Croydon Printing Company Ltd.

## Background of the Invention

The use of microcapsules to encase and isolate cure-inducing ingredients in one-pack curable compositions so as to give compositions which do not cure until the capsules are melted or ruptured is well known. Examples of such applications are contained in U.S. Patents 3,639,137, to Marinelli; 3,657,379, to Hilbelink et al.; 3,996,309, to Douek et al.; 4,101,501, to Hinterwaldner; and 4,126,504, to Wolinski et al.

A technique for manufacturing meltable capsules containing amine hardeners for epoxy resins is disclosed in U.S. Patent 3,167,602, to Bentov et al.

Heretofore it has been understood that in order to successfully prevent premature polymerization of such compositions it was necessary to employ encapsulation techniques which assured that the cure inducing components were completely encased within a shell impervious to the curable ingredients of the composition.

In U.K. Patent 614047 there is described a method of preparing a vitamin C powder by dispersing vitamin C in a molten fat or wax, cooling and solidifying the dispersion and finally converting it to a powder. This reference, however, does not suggest a useful method of encapsulating components of a curable composition.

0152209

In copending patent application serial no. 525,351, filed Aug. 22, 1983, there are described curable anaerobic liquid compositions containing a slurry of finely divided wax particles which can be applied to a substrate at temperatures above the melting point of the wax so as to produce a nonmigrating anaerobically curable coating.

## Summary of The Invention

The present invention results from the surprising discovery that significant lengthening of the pot life or shelf life of a one-pack curable composition can be achieved by dissolving or dispersing at least one component of the cure initiation system in finely divided meltable resin particles which are then included in the composition as a slurry of undissolved particles. The component isolated within the resin particles may be released, so as to induce rapid curing, by heating the composition to the melting point of the particles.

The invention, however, is not limited to such curable compositions in which the meltable particles contain an inititator ingredient. Other "critical" ingredients which are desirably isolated from the composition until cure is induced may also be incorporated into one-pack curable compositions as ingredients of a wax or meltable resin particle slurry.

A further aspect of the invention is therefore a means for isolating a critical ingredient of the curable composition from the remaining ingredients of said composition, the means comprising finely divided meltable particles of a meltable wax or resin having the critical ingredient dissolved or dispersed therein. Examples of such "critical" components which are not initiator ingredients include functional additives which may have undesirable long term destabilizing effects, dyes or pigments whose release into the composition would be indicative of temperature, and stabilizers which may be desirably released at particular composition temperatures.

Detailed Description of The Invention

The meltable particles of the invention are prepared by simply mixing the desired "critical" component with a molten resin which, when solid, will not dissolve in the curable composition, cooling the mixture and grinding or otherwise converting the resulting resin mass with entrained critical component into a fine powder.

The meltable particles are useful for producing one-pack storage-stable compositions with a wide variety of curable systems including free radically curable ethylenically unsaturated monomers, such as acrylic, styrenic and other vinyl monomers; amine, polyol, or thiol cured epoxy compositions; cationically curable systems; silicones; and polyisocyanate compositions.

The meltable resins which may be used as the isolating matrix for the critical components include waxes, hot melt resins, and other resins described at column 5, line 61 - column 6, line 26 of U.S. Patent 3,547,851. It should be noted, however, that not all meltable resins will be suitable for use with all curable compositions. The meltable resins are selected so as to be solids at the composition storage temperature, insoluble in the remaining ingredients of the curable composition, and not themselves a curing agent for the composition. Thus, for instance, polyamine resins are not usable in epoxy or polyisocyanate compositions.

Examples of meltable resins which have been found suitable for a wide variety of curable compositions include polyethyleneglycol distearates, such as PEG 2000 sold by Leek Chemicals; polyterpene resins, such as sold by Yasuhara Yushi Kogyo under the trademarks YS TO-85 and YS TO-105; maleic ester resins, such as Union Camp products Uni-rez 7020 and Uni-rez 7105; aliphatic resins, such as Escorez 5300, a hydrogenated resin, and Escorez 2101, an aromatic modified aliphatic resin, both sold by Exxon; and ester waxes such as the Hoechst product Wax F, an ester wax based on crude montan wax, and Vestowax E321, an ester wax based on a synthetic polyolefin and sold by Huls. The foregoing resins provide a spectrum of softening points within the preferred range of 50°-130°C. Resins outside this range, as for example up to 165°C, could be used for certain applications

The critical ingredients which may be entrained within the meltable resin particles are typically cure initiators or accelerators. Examples include, accelerators for epoxy systems such as dimethylpiperazine and nonyl phenol; amine curing agents for epoxies and polyisocyanates, such as DABCO sold by Air Products Corp.; condensation catalysts for silicone resins, such as dibutyltin dilaureate; and cure accelerators or initiators for acrylic compositions, such as transition metal compounds, acetylphenylhydrazine, or peroxide initiator compounds. Other materials, however, may advantageously be entrained within the meltable resins and incorporated into curable compositions. Thus, adhesion promoters, stabilizers, foaming agents, crosslinking agents, antioxidants and chelators may occasionally be desirably isolated from the curable ingredients of the composition until initiation of cure. This is particularly so where the additive tends to destabilize the shelf or pot life of the composition.

Compositions of the invention employing cure components entrained in meltable particles can be dispensed through a heated nozzle to release the entrained cure component and activate rapid cure. Thus, such compositions have the advantages of long pot life and rapid cure which are typical of UV curing systems without the necessity for UV transparency. Opaque fillers may be utilized in such compositions without sacrifice of cure speed or depth.

The meltable particles of the invention should be of the size which can be easily suspended in the curable composition. The optimal particle size will depend on a variety of factors including the viscosity of the curable composition. The relative polarities of the curable composition ingredients and of the meltable resin and density factors. In general; however, it is preferred that average particle diameter be in the range of _50_ - _600_ microns, more preferably in the range of _200_ - _400_ microns.

The invention may be illustrated by the following nonlimiting examples.

EXAMPLE 1

Epoxy System

PEG 6000 Distearate (30g) was melted and N,N-dimethyl piperazine (10g) was added, with stirring, to the molten wax and mixed thoroughly while the wax was molten. The resulting mixture was cooled below the melting point of the wax (50°C) using ice-water. The wax/piperazine product was then scraped from the side of the mixing container and ground to constant size.

A formulation using the wax/piperazine particles was prepared by mechanically stirring together the following ingredients:

|  | Wt. in gms. |
|---|---|
| Bisphenol A diglycidyl ether | 56.5 |
| Dicyandiamide | 3.5 |
| Aluminium Powder | 5.0 |
| Hycar Carboxyl terminated butadiene nitrile rubber | 15.0 |
| Wax/piperazine particles | 3.0 |
| Pentahard 178 (Norbornyl dicarboxylic anhydride) | 1.0 |

**0152209**

The formulation had an initial viscosity of 200,000 cPs (Spindle 7, 20RPM, 25°C Brookfield) which rose to 250,000 cPs over a period of two weeks and showed no increase in viscosity from 250,000 after three weeks.

A control formulation, i.e. where an equal amount of N-dimethyl piperazine had not been mixed with wax but added as a liquid, set up after three weeks at room temperature. (Initial viscosity 250,000 cPs, Sp. 7, 20 RPM, 25°C, Brookfield.)

EXAMPLE 2

Acrylic System

The purpose of this example is to show how mixing an iron octoate solution (6% iron) with a wax and adding the metal in this form as a portion of one-part of a two-part heat curing acrylic system can considerably extend the pot-life of the mixed material.

A 30% mixture of iron octoate (6% iron) in Hoechst FP 900 wax (m.p. 65-70°C) was prepared by mixing the iron octoate and wax together in hot water with vigorous agitation. Adding a large quantity of cold water cools the wax droplets and permits the isolation by filtration of the particles of wax/Fe octoate mix. These were washed with water and dried before addition to a formulation.

The fact that the iron octoate was homogeneously distributed in the wax matrix, rather than being encapsulated in a wax shell, was demonstrated by crushing some of

0152209

the particles on an absorbent surface. No staining was observed, i.e. no free liquid was produced:

Formulations were prepared as shown in Table I. Adhesive mixtures were then prepared by mixing equal quantities of part A with one of the part B formulations at room temperature. Gel times of the adhesive mixtures at 23°C and 83°C are shown in Table II. As shown in Table II, the mixture prepared with part B2 which employs the inventive wax particles, had a greatly extended room temperature pot-life without sacrifice of its elevated temperature activity.

<div align="center">TABLE I</div>

|  | Part A | Part B | | |
|---|---|---|---|---|
|  |  | 1 | 2 | 3 |
| Methacrylate resin [1] | 66.66 | 62.3 | 62.3 | 62.3 |
| Hydroxypropyl methacrylate | 17.20 | 16.6 | 16.6 | 16.6 |
| Dye | 1.73 | 2.0 | 2.0 | 2.0 |
| 2,2-dimethoxy-2-phenyl-acetophenone | 3.5 | 4.0 | 4.0 | 4.0 |
| Silicon dioxide | 7.25 | 4.6 | 4.6 | 4.6 |
| Naphthaquinone Stabilizer soln. | -- | 0.2 | 0.2 | 0.2 |
| Benzoquinone Stabilizer soln. [2] | 0.1 | -- | -- | -- |
| Acetylphenylhydrazine | 0.25 | -- | -- | -- |
| Cumene hydroperoxide | 1.04 | -- | -- | -- |

TABLE I (con't)     0152209

|  | Part A | Part B | | |
|---|---|---|---|---|
|  |  | 1 | 2 | 3 |
| Acrylic acid | 2.0 | -- | -- | -- |
| $Na_4$ EDTA chelator Solution [3] | 0.02 | -- | -- | -- |
| 6% Iron octoate | -- | 0.559 | -- | 0.8073 |
| Iron octoate/wax | -- | -- | 2.691 | -- |
| Calculated Fe ppm | 0 | 372 | 582 | 582 |

1. Prepared from hydrogenated Bisphenol A, toluene diisocyanate and hydroxypropyl methacrylate.

2. Stabilizer solution is 5% Benzoquinone in PEG dimethacrylate.

3. $Na_4$ EDTA Chelator is 9.2% $Na_4$ EDTA dissolved in Ethylene glycol and water (81.6 : 9.2).

## TABLE II

| Mixture of 50% Part A and 50% Part B | 23°C Gel Time | 82°C Gel Time |
|---|---|---|
| B1 | 4 hrs. | 2 min. 30 secs. |
| B2 | Greater than 24 hr. | 1 min. 15 secs. |
| B3 | 2 hr. | 1 min. 15 secs. |

EXAMPLE 3                                          **0152209**

Acrylic System

The purpose of this example is to demonstrate how mild
heating of formulations such as those in Example 2 promotes
liberation of the wax entrained curing agent with an
acceleration in the rate of R.T. curing.

An adhesive was prepared as follows:

| | |
|---|---|
| Ethoxylated bisphenol-A-dimethacrylate | 91 |
| Cumene hydroperoxide | 1.0 |
| Acetylphenylhydrazine | 0.5 |
| Saccharin | 0.5 |
| Acrylic acid | 3.0 |
| $Na_4$ EDTA Chelator solution | 2.0 |
| Stabilizer solution | 1.0 |

To five grams of this adhesive in a test tube was added
0.15 grs. of Fe octoate/wax mixture prepared as in Example
2. The solution was mixed for 2 minutes to disperse the
granules evenly.

A 1 ml. syringe was filled with 0.5 mls. of this
solution and placed in an oil bath at 82°C for a measured
interval. The contents were immediately expelled into a
small phenolic cup 1 mm in diameter and .6 mm deep and the
time to gel noted. This was compared to the gel time of the
sample held at R.T. Results obtained are shown in Table
III.

TABLE III     **0152209**

| Duration of exposure 82°C | Time to form non flowing gel. at R.T. | Time to form hard gel. at R.T. |
|---|---|---|
| 0 seconds (R.T. control) | >7 days | |
| 25 seconds | >7 days | |
| 35 seconds | >7 days | |
| 45 seconds | 10 minutes | 5-8 hours |
| 55 seconds | 5 minutes | 5-8 hours |
| 65 seconds | 5 minutes | 25 minutes |
| 75 seconds | -- | 15 minutes |
| 85 seconds | 5 minutes | 15 minutes |

This experiment shows clearly that mild heating releases the active metal and promotes gelation of the system.

Heating the adhesive alone (without Fe octoate/wax) at 82°C for 5 minutes does not produce gelation in 7 days after the exposure.

- 13 -

EXAMPLE 4                                    0152209

Epoxy System

A formulation was prepared from the following ingredients:

|  | pHr Range |
|---|---|
| Bisphenol A diglycidyl ether | 50-60 |
| Epichlorohydrin rubber | 10-15 |
| Dicyandiamide | 2-8 |
| Encapsulated system (Dimethyl piperazine/Escorez) | 10-15 |

The viscosity of such a formulation was measured at 25°C over a period of 3 months and showed no increase in viscosity over this period. However, if the dimethylpiperazine was added directly to the formulation without previously encapsulating the dimethylpiperazine it solidified in seven days.

EXAMPLE 5

Silicone System

An experiment was performed in which 5 gms of meltable resin particles prepared from a molten mixture of Hoechst Wax F and Wacker Hardener T935 (5% w/w) was added to a 10% mixture by weight of Polymer M 444Z and Wacker Silane TES 40 . (Total 60 gms.)

Hardener T935 is a 15% mixture of an organotin compound and TES 40 with ethanol and butanol. Silane TES 40 is a mixture of tetraethyl silicate and its condensation products. Polymer M 444Z is a silicone resin based on an organic polymer embedded in a polydimethyl siloxane matrix, also sold by Wacker.

This composition achieved full cure in 3 minutes at 100°C, while the hardener added directly without encapsulation took 2 hours to cure at room temperature, also the pot-life of the system was extended from two hours at room temperature to greater than twelve hours at room temperature.

EXAMPLE 6

Polyurethane System

Desmodur EZ1 , a polyetherglycol sold by Bayer, was mixed in a 2:1 weight ratio with Teracol 650 , a diisocyanate product of DuPont. To this was added 10% w/w of meltable resin particles prepared from a molten mixture of 5% DABCO , an amine catalyst, in Escorez 5300 . The composition cured in 5 minutes at 100°C, while at room temperature it cured slowly over 24 hours. A formulation identical except that the DABCO was added neat rather than entrained in a meltable resin had a room temperature pot life of only about 1/2 hour.

The room temperature shelf life of this composition can be further extended by using dried raw materials.

CLAIMS

1.  A curable composition comprising a curable component
    selected from free radically curable ethylenically
    unsaturated compounds, epoxy resins, condensation
    polymerizable silicones and isocyanate functional
    compounds and a catalyst system for curing said
    curable component, the improvement comprising
    that the composition includes finely divided meltable
    particles of a meltable wax or resin which is
    solid and insoluble in said composition ingredients
    at ambient storage temperatures and in which is
    uniformly dispersed or dissolved at least one
    component of said cure system.

2.  A composition as in Claim 1 wherein said curable
    component is an epoxide resin.

3.  A composition as in Claim 2 wherein said catalyst
    system is selected from cationic catalysts and
    hydroxy, thiol or amine hardeners.

4.  A composition as in Claim 2 wherein the catalyst
    system comprises dimethylpiperazine, said dimethylpiperazine being the catalyst component uniformly
    dispersed or dissolved in said meltable particles.

5.  A composition as in Claim 4 wherein the catalyst
    system further comprises dicyandiamide dissolved
    in said epoxy resin component.

6.  A composition as in Claim 1 wherein said meltable
    particles have an average size of 50-600 microns.

0152209

7. A composition as in Claim 6 wherein said average particle size is 200-400 microns.

8. A composition as in Claim 1 wherein said meltable wax resin is selected from polyethylene glycol distearates, polyterpene resins, maleic ester resins, aliphatic and aromatic modified aliphatic resins and ester waxes having a softening range between 50°C-160°C.

9. A composition as in Claim 8 wherein the softening range is between 50°C and 130°C.

10. A composition as in Claim 1 wherein said curable component is a free radically curable ethylenically unsaturated compound.

11. A composition as in Claim 10 wherein said curable component is an acrylate or methacrylate functional compound.

12. A composition as in Claim 11 wherein said catalyst component in said wax particles is selected from transition metal compounds, acetylphenylhydrazine and peroxide compounds.

13. A composition as in Claim 12 wherein said catalyst in said wax particles is iron octoate.

14. A composition as in Claim 1 wherein the curable component dissolved or dispersed in said meltable particles is an isocyanate functional compound and the catalyst component is an amine.

0152209

15. A composition as in Claim 1 wherein the curable component is a condensation polymerizable silicone and the catalyst component dissolved or dispersed in said meltable particles is an organotin compound.